# EUROPÄISCHE PATENTANMELDUNG

(11) **EP 2 399 460 A1**
(43) Veröffentlichungstag der Anmeldung: **28.12.2011**
(21) Anmeldenummer: 11171759.1
(22) Anmeldetag: 28.06.2011
(51) Int. Cl.: A21B 7/00

(54) **Beschickungseinrichtung, Backvorrichtung und Backverfahren**

(30) Priorität: 28.06.2010 DE 102010030606
(71) Anmelder: GSF Gesellschaft für System- und Fördertechnik mbH, 02994 Bernsdorf (DE)
(72) Erfinder: Tönnigs, Bodo, 09638 Lichtenberg (DE); Tönnigs, Sven, 09638 Lichtenberg (DE)
(74) Vertreter: Lippert, Stachow & Partner

(57) **Zusammenfassung**

Die Erfindung betrifft eine Beschickungseinrichtung (1), die eine in horizontaler x-Richtung verlaufende Schiene (11), an der eine in vertikaler y-Richtung ausgerichtete Säule (12) bewegbar gelagert ist, und einen an der Säule (12) in y-Richtung bewegbar gelagerten Lader (13), der eine Greifeinrichtung (14) für einen Lebensmittelträger (7) umfasst, die in z-Richtung, senkrecht zur x- und y-Richtung, linear bewegbar gelagert ist, enthält; durch eine Backvorrichtung, die einen Backofen (4), ein Bevorratungsregal (2), ein Ausgaberegal (3) und in dem Abstand zwischen Bevorratungsregal (2) und Ausgaberegal (3) eine horizontal beweglich angeordnete Beschickungseinrichtung (1) umfasst, wobei die Beschickungseinrichtung (1) einen Lader (13) mit einer Greifeinrichtung (14) zum Greifen und Halten eines Lebensmittelträgers (7) aufweist und die Greifeinrichtung (14) in vertikaler und horizontaler Richtung so bewegbar ist, dass Backprodukte enthaltende Lebensmittelträger (7) zwischen Bevorratungsregal (2), Backofen (4) und Ausgaberegal (3) bedarfsweise hin und her bewegbar sind sowie durch Angabe eines entsprechenden Backverfahrens.

## Beschreibung

Die Erfindung betrifft eine Beschickungseinrichtung für Lebensmittelbehandlungsvorrichtungen, insbesondere für Backvorrichtungen, eine Backvorrichtung mit einer Backofenbeschickungseinrichtung sowie ein Backverfahren.

Lebensmittel, die gewöhnlich direkt nach ihrer Herstellung von den Kunden frisch gekauft werden und zum schnellen Verzehr bestimmt sind, wurden über lange Zeit hauptsächlich über Fachgeschäfte vertrieben. Ein Vertrieb über Supermärkte erweist sich hier als schwierig, da diese Lebensmittel zunächst dorthin transportiert werden müssen, während sie in den Fachgeschäften direkt hergestellt werden. Sollen beispielsweise Backwaren in Supermärkten in der gleichen Qualität verkauft werden wie in Fachgeschäften, so bedarf es einer Herstellungsmöglichkeit der Backwaren direkt im Supermarkt. Derartige Vorrichtungen sollten aufgrund der Funktionsweise eines Supermarkts als Verkaufsmarkt und nicht als Herstellungsbetrieb weitestgehend automatisch funktionieren.

Eine solche Vorrichtung zur Lagerung, Behandlung und Ausgabe von Lebensmitteln wird beispielsweise in der WO 2006/097448 beschrieben. Die hier beschriebenen Vorrichtung enthält einzelne Abschnitte zur Lagerung, zur Behandlung und zur Ausgabe der Lebensmittel, zwischen denen der Transport gewährleistet wird durch individuelle Träger zur Aufnahme der Lebensmittel bzw. Backwaren, die auf Transportbändern sowie über eine vertikal verschiebbare Erfassungsvorrichtung durch Bevorratungsregal, Ausgaberegal bzw. Ofen hindurch bzw. von einem zum anderen transportiert werden. Aufgrund der nur linearen Bewegungsmöglichkeiten der Fördereinrichtung und der Kombination von Bändern und individuellen Trägern erfordert dieses System jedoch zum einen eine entsprechende Anordnung der einzelnen Abschnitte hintereinander. Zum anderen erfordert die verwendete Fördereinrichtung eine größere Zahl von Antriebselementen und hat hohe Anforderungen an die Wartung und Reinigung.

In der EP 1 688 042 A2 wird in gleicher Grundanordnung eine alternative Fördereinrichtung offenbart, die mit einer geringeren Zahl von Antriebselementen auskommt, zudem eine integrierte Reinigungsmöglichkeit zumindest für einen Teil der Fördereinrichtung enthält. Nach wie vor ist damit jedoch die Anordnung der Abschnitte vorgegeben und die Wartung sowie der Fördereinrichtung gestaltet sich ebenfalls schwierig. Zudem ist sie bezüglich Durchsatz und Unabhängigkeit der Herstellung verschiedener Produkte nicht optimierbar, da alle Produkte über dasselbe Förderband durch den Durchlaufbackofen hindurchgeführt werden müssen.

Die DE 196 37 294 A1 beschreibt hingegen eine Backanlage mit einer Anordnung mehrerer Öfen in einer Reihe. Desweiteren enthält diese Backanlage eine verfahrbare Beschickungs-Einrichtung mit in der Höhe verstellbaren Ladevorrichtungen, die jeweils eine in einen Herd hinein verfahrbare Beschickungszunge mit einem Beschickungsband aufweist. Auch hier ist das Transportsystem in Ausführung, Wartung und Reinigung nachteilig. Zudem werden, da die Teigstücke von den Ladevorrichtungen in den Herden abgelegt werden, neben den Ladevorrichtungen bzw. der gesamten Beschickungseinrichtung zusätzlich die Ablageflächen in den Herden verschmutzt.

Die DE 100 47 692 B4 beschreibt eine Beschickungs-Einrichtung für eine Back-Anlage, die eine im Vergleich zu den bisherigen Beschickungs-Einrichtungen höhere Gesamtleistung erlaubt, nach wie vor aber eine größere Zahl von Antriebselementen benötigt, mehrere Übergabepunkte für einen Transportvorgang aufweist und ebenfalls aufwendig zu reinigen und zu warten ist.

Eine vereinfachte Fördervorrichtung ist in der Beschreibung des Backsystems der DE 10 2004 019 905 A1 offenbart. Aber auch dieses Backsystem arbeitet mit Endlos-Förderbändern in der Bevorratungseinrichtung, der Fördervorrichtung und der Backvorrichtung, was wiederum eine entsprechend hohe Zahl von Antriebselementen sowie die notwendige Abstimmung der Bänder untereinander erfordert.

Alle dargestellten Lebensmittelbehandlungs- oder Backsysteme weisen relativ komplizierte Transport- und Beschickungssysteme auf. Dies erfordert einen hohen Reinigungs- und Wartungsaufwand und vermindert die Flexibilität des gesamten Lebensmittelbehandlungs- bzw. Backsystems. Zudem macht es eine automatische Steuerung des gesamten Lebensmittelbehandlungs- oder Backsystems schwierig, insbesondere, wenn das System auf den Bedarf bezüglich unterschiedlicher Produkte bzw. ihrer Anzahl reagieren muss.

Aufgabe der vorliegenden Erfindung ist es deshalb, eine Beschickungseinrichtung für Lebensmittelbehandlungsvorrichtungen, die mit einer geringen Zahl von Antriebselementen auskommt, flexibel, reinigungs- und wartungsarm ist, eine Backvorrichtung, die in ihren Ausmaßen kompakt ist, gleichzeitig jedoch eine hohe Flexibilität und einen hohen Automatisierungsgrad aufweist, und ein entsprechendes Backverfahren zu beschreiben.

Diese Aufgabe wird erfindungsgemäß gelöst durch eine Beschickungseinrichtung für Lebensmittelbehandlungsvorrichtungen mit den Merkmalen des Anspruchs 1, eine Backvorrichtung mit den Merkmalen des Anspruchs 12 und ein Backverfahren mit den Merkmalen des Anspruchs 19. Die Ansprüche 2 bis 11, 13 bis 18 und 20 bis 25 geben Ausführungsvarianten dieser Lösungen wieder.

Vorgeschlagen wird zunächst eine Backofenbeschickungseinrichtung, umfassend mindestens eine in horizontaler x-Richtung verlaufende Schiene, an der mindestens eine in vertikaler y-Richtung ausgerichtete Säule bewegbar gelagert ist, und mindestens einen an der Säule in y-Richtung bewegbar gelagerten Lader, der eine Greifeinrichtung für einen Lebensmittelträger umfasst, die in z-Richtung, senkrecht zur x- und y-Richtung, linear bewegbar gelagert ist.

Die Bezeichnung "Backofenbeschickungseinrichtung" bezieht sich auf eine bevorzugte Ausgestaltung einer Beschickungseinrichtung für Lebensmittelbehandlungsvorrichtungen aller Art, beispielsweise Koch-, Brat-, Frittier-, Backeinrichtungen und dergleichen. Demzufolge sind unter "Lebensmittelträgern" alle möglichen Ausgestaltungen zu verstehen, auf oder in denen Lebensmittel zur weiteren Behandlung üblicherweise abgelegt werden, beispielsweise Kochtöpfe, Bratpfannen, Frittierkörbe, Backbleche usw.

Diese Beschickungseinrichtung, die zum Beschicken von kundennahen Lebensmittelbehandlungsvorrichtungen eingesetzt werden kann, und folglich bezüglich Größe, Präzision der Beschickung, Temperaturbelastung, Hygiene und Durchsatz die Anforderungen einer solchen Vorrichtung erfüllen muss, umfasst eine Schiene in horizontaler x-Richtung, auf der mindestens eine in vertikaler y-Richtung ausgerichtete Säule linear und parallel zur Vorderfront der zu beschickenden Lebensmittelbehandlungsvorrichtung bzw. Abschnitte dieser Vorrichtung bewegbar ist, und mindestens einen Lader, der in y-Richtung parallel zur Vorderfront entlang der Säule der zu beschickenden Vorrichtung bzw. Vorrichtungsabschnitte sowie in z-Richtung, senkrecht zur x- und y-Richtung, linear bewegbar ist. Sie weist einen Lader auf, der eine Greifeinrichtung für einen Lebensmittelträger enthält, wobei dieser Lebensmittelträger geeignet sein muss, eine Vielzahl von entsprechenden Produkten aufzunehmen, um einen hohen Durchsatz zu erreichen.

Im Falle von Temperaturbehandlungen von Lebensmitteln wie z.B. in Backvorrichtungen handelt es sich bei den Lebensmittelträgern typischerweise um Bleche, da diese entsprechend temperaturbeständig und einfach zu reinigen sind. Dabei umfasst der Lader eine Greifeinrichtung, die den Lebensmittelträger in einer Startposition greift, während des Transports zum Zielort stützt und den Lebensmittelträger in der Lebensmittelbehandlungsvorrichtung ablegt. Diese Greifeinrichtung ist so ausgestaltet, dass sie eine schlupflose Aufnahme des Lebensmittelträgers an beliebigen Stellen seines Randes ermöglicht. Dazu ist idealerweise der Rand des Lebensmittelträgers an beliebiger Stelle gleichartig geformt und die Greifeinrichtung enthält zwischen seinen beiden Greiferteilen das negative Abbild dieser Form.

Vorteilhaft ist es dabei, wenn die Greifeinrichtung des Laders der Beschickungseinrichtung eine Rotationsmöglichkeit, vorzugsweise von mindestens +/- 90° aus seiner in x-Richtung neben der Säule befindlichen Ausgangsposition um eine zur y-Achse parallele vertikale Achse beinhaltet. Dadurch kann sich die Greifeinrichtung derart um diese zur y-Achse parallele Achse drehen, dass der Lebensmittelträger ggf. von quer auf längs bzw. wieder zurück gedreht werden kann und so sowohl in seiner Querrichtung als auch in seiner Längsrichtung in die Lebensmittelbehandlungsvorrichtung bzw. definierter Abschnitte einer komplexen Lebensmittelbehandlungsvorrichtung eingeführt werden kann, was eine höhere Flexibilität der Anordnung einzelner Abschnitte ermöglicht.

In besonderer Ausgestaltung ermöglicht dabei eine zusätzliche weitere Rotationsmöglichkeit der Greifeinrichtung des Laders der Beschickungseinrichtung, dass sich dieser, vorzugsweise um mindestens +/- 90°, aus seiner Ausgangsposition, die der Horizontallage des Lebensmittelträgers entspricht, um eine horizontale Drehachse drehen kann. Dies erlaubt eine einfache Handhabung für Schritte, bei denen eine Vertikallage des Lebensmittelträgers günstig ist, wie zum Beispiel während seiner Reinigung. Zudem ermöglicht es ein Abkippen bzw. Abstreifen der Produkte vom Lebensmittelträger. Dazu kann der Lebensmittelträger zunächst durch eine entsprechende Drehung um die vertikale Achse in die gewünschte Position gebracht und anschließend um die horizontale Achse gekippt werden.

Zur Erhöhung des Durchsatzes kann die Beschickungseinrichtung in einer Ausgestaltung zwei oder mehr Lader enthalten, wobei diese Lader beidseitig der vertikal ausgerichteten Säule und/oder übereinander auf derselben Seite der Säule angeordnet sein können. Obwohl der Anzahl der Lader nach oben keine feste Grenze gesetzt ist, ist es günstig mit höchstens sechs Ladern zu arbeiten, da die Ladevorgänge der einzelnen Lader zumindest in den vorhandenen physischen Grenzen miteinander kombiniert werden müssen. So kann die Beschickungseinrichtung in der Regel nicht gleichzeitig über die gesamte Länge einer Lebensmittelbehandlungsvorrichtung tätig sein, sondern nur in nebeneinander oder sich gegenüberliegenden Abschnitten dieser Vorrichtung.

Im Rahmen der aufgezeigten Grenzen kann jedoch in einer Ausgestaltung jeder Lader einer mehrere Lader enthaltenden Beschickungseinrichtung unabhängig von den anderen bewegt und gesteuert werden, so dass verschiedene Lader einer Beschickungseinrichtung zur gleichen Zeit unterschiedliche Funktionen ausführen können. Dabei kann gemäß einer weiteren Ausgestaltung auch jede Greifeinrichtung eines Laders unabhängig von der Greifeinrichtung eines anderen Laders einzeln bewegbar und steuerbar sein.

In einer anderen Ausgestaltung können die Lader einer mehrere Lader enthaltenden Beschickungseinrichtung jedoch auch starr miteinander verbunden sein. Dies ist beispielsweise dann gewünscht, wenn im einfachen oder mehrfachen Abstand der Etagen einer Lebensmittelbehandlungsvorrichtung, beispielsweise eines Backofens, oder einem anderen Abschnitt der Lebensmittelbehandlungsvorrichtung, beispielsweise einem Bevorratungsregal oder Ausgaberegal, Lebensmittelträger aufgenommen oder abgelegt werden sollen.

Gemäß einer weiteren Ausgestaltung, insbesondere, wenn der Lebensmittelträger mit den darauf liegenden Lebensmitteln wie Backprodukten usw. sehr schwer ist, kann die Beschickungseinrichtung als Zweisäulensystem gestaltet sein, wobei beide Säulen in Richtung der y-Achse ausgerichtet sind.

Je nach Lebensmittelbehandlungsvorrichtung können die entsprechenden Produkte sehr heiß werden und es besteht die Notwendigkeit, die Produkte möglichst schnell abzukühlen. Hierzu kann die Beschickungseinrichtung Mittel zur aktiven Kühlung der Lebensmittelträger und der darauf aufliegenden Produkte aufweisen. Dies ist beispielsweise möglich durch ein zusätzlich an der Säule der Beschickungseinrichtung installiertes Kühlaggregat, wobei beispielsweise mittels Luftstrom gekühlt werden kann. Eine absenkbare Kühlhaube zum Abkühlen der Produkte während des Transports zwischen einzelnen Abschnitten der Lebensmittelbehandlungsvorrichtung ist eine weitere Variante.

Zum vereinfachten Bewegen des Laders, beispielsweise in einen Abschnitt der Lebensmittelbehandlungsvorrichtung wie ein Bevorratungsregal, einen Backofen, ein Ausgaberegal und dergleichen hinein, kann der Lader der Beschickungseinrichtung eine Teleskopführung enthalten, mit der die lineare Bewegung der Greifeinrichtung und damit des Lebensmittelträgers in horizontaler z-Richtung realisiert wird.

Der Lader und die Greifeinrichtung der Beschickungseinrichtung enthalten vorteilhaft mindestens eine elektrische und/oder mindestens eine pneumatische Antriebseinrichtung. Durch derartige Antriebseinrichtungen können die Bewegungen des Laders relativ zur Säule und der Greifeinrichtung relativ zum Lader und zur Säule in den beschriebenen Freiheitsgraden einfach und kostengünstig realisiert werden.

Weiterhin wird eine Backvorrichtung vorgeschlagen, die mindestens einen Backofen, ein Bevorratungsregal, ein parallel mit einem Abstand zum Bevorratungsregal angeordnetes Ausgaberegal und in dem Abstand zwischen Bevorratungsregal und Ausgaberegal eine parallel zu Bevorratungsregal und Ausgaberegal horizontal beweglich angeordnete Beschickungseinrichtung umfasst, wobei die Beschickungseinrichtung mindestens einen Lader mit einer Greifeinrichtung zum Greifen und Halten eines Lebensmittelträgers aufweist und die Greifeinrichtung in vertikaler und horizontaler Richtung so bewegbar ist, dass Backprodukte enthaltende Lebensmittelträger zwischen Bevorratungsregal, Backofen und Ausgaberegal bedarfsweise hin und her bewegbar sind.

Die vorgeschlagene Backvorrichtung umfasst ein Bevorratungsregal, eine Beschickungseinrichtung, einen Backofen und ein Ausgaberegal, wobei alle Abschnitte der Backvorrichtung durch ein und dieselbe zentrale Beschickungseinrichtung mit Backprodukte enthaltenden, transportierbaren und temperaturbeständige Lebensmittelträgern beschickbar sind. Die Lader der Beschickungseinrichtung bewegen dabei einen solche Backprodukte enthaltenden Lebensmittelträger mindestens linear in x-, y- und z-Richtung, d.h., die Beschickungseinrichtung arbeitet als so genannter Linearbeschicker, wobei hierzu eine Greifeinrichtung den Lebensmittelträger durch Klemmen aufnimmt.

Bei dem hier eingesetzten Ofen kann es sich je nach benötigter Backleistung um einen Etagenofen oder aber einen einfachen Standardofen handeln. Auch die Kombination mehrerer Öfen ist möglich. Das Ausgaberegal ist typischerweise ein Selbstbedienungsregal zum Anbieten der Backprodukte für die Kunden.

Durch den Einsatz einer zentralen Beschickungseinrichtung ist es möglich, die Backvorrichtung als sehr kompaktes System aufzubauen, da einzelne Abschnitte der Backvorrichtung nicht mehr starr hintereinander oder nebeneinander angeordnet werden müssen, sondern sehr flexibel zueinander aufgestellt werden können. Dies sichert einen hohen Umsatz pro Quadratmeter Verkaufsfläche. Auch ist die Backvorrichtung vor allem aufgrund der kompakten und im Vergleich zu anderen Lösungen aus nur wenigen Teilen bestehenden Beschickungseinrichtung mit wieder nur geringer Zahl von Antriebselementen schnell zu reinigen und wartungsarm. Eine so konzipierte Backvorrichtung ermöglicht einen sehr hohen Automatisierungsgrad und benötigt folglich nur einen geringen Personalaufwand.

### Durch den Einsatz genormter und großflächiger

Lebensmittelträger, in der Regel Backbleche, für jeweils gleichartige Backprodukte ist eine größere Anzahl von Backprodukten gleichzeitig und vollautomatisch herstellbar.

Die Art des Transport- und Beschickungssystems, die es erlaubt, temperaturbeständige und transportierbare Lebensmittelträger für die Backprodukte zu verwenden, birgt zudem gegenüber den bisher in ähnlichen Anlagen verwendeten Transportbändern mit häufigen Übergabepunkten und einen hohen Antriebsaufwand ein gewaltiges Vereinfachungspotential und damit eine geringere Ausfallwahrscheinlichkeit, Wartungsarmut sowie geringere Reinigungserfordernisse.

In einer besonders vorteilhaften Ausgestaltung enthält dabei die erfindungsgemäße Backvorrichtung eine Beschickungseinrichtung der oben beschriebenen Art, deren Vorteile für entsprechende Lebensmittelbehandlungsvorrichtungen bereits ausgeführt wurden.

Eine entsprechende Backvorrichtung kann dabei zusätzlich eine Auflegestation und/oder einen separaten Belader für das Bevorratungsregal und/oder eine Reinigungsstation enthalten. Die Nutzung solcher zusätzlicher Abschnitte ist abhängig von dem erforderlichen Durchsatz und dem Grad der gewünschten Automatisierung am jeweiligen Einsatzort. Dabei ist es möglich, in einer Auflegestation Belegeroboter einzusetzen und so ein manuelles Auflegen der Backausgangsprodukte zu vermeiden.

Dabei können das Bevorratungsregal und/oder das Ausgaberegal der erfindungsgemäßen Backvorrichtung mehrere Teilabschnitte beinhalten. Insbesondere wenn eine größere Zahl unterschiedlicher Backprodukte hergestellt werden, soll und/oder die Auslastung der Backvorrichtung zu verschiedenen Zeiten stark variiert, erweisen sich Regale, die mehrere und ggf. unterschiedliche Teilabschnitte enthalten, als günstig.

So kann das Bevorratungsregal der erfindungsgemäßen Backvorrichtung beispielsweise ein Kühl- oder Tiefkühlregal und/oder ein Regal für vorgebackene Backprodukte enthalten, so dass sowohl Tiefkühlteiglinge als auch vorgebackene Backprodukte gelagert werden können. Je nach Art der Backprodukte können dabei auch unterschiedliche Lagerungsbedingungen eingestellt werden. Im Kühl- oder Tiefkühlregal können sich beispielsweise mehrere separat steuerbare Kühlkammern befinden, um eine hohe Energieeffizienz zu erreichen.

Auch das Ausgaberegal der erfindungsgemäßen Backvorrichtung kann in Teilabschnitte mit verschiedenen Funktionen unterteilt sein. Ein Teil des Ausgaberegals kann als Selbstbedienungsregal ausgestaltet sein, wobei hier einzelne Fächer unterschiedlichen Backprodukten angepasst sein können. Ein anderer Teil des Ausgaberegals, vorzugsweise im oberen Bereich dieses Regals, kann als Pufferregal dienen, von dem aus schnell fehlende Backprodukte in die Fächer des Selbstbedienungsregals nachgeführt werden können. Hierfür wird dann wiederum die Beschickungseinrichtung genutzt. Das Pufferregal kann zudem zum Abkühlen der Backprodukte nach dem Backprozess genutzt werden, wodurch eine eventuelle aktive Kühlung durch die Beschickungseinrichtung nach dem Backprozess reduziert oder vermieden werden kann.

In bevorzugter Ausführung ist die beschriebene Backvorrichtung programmierbar und steuerbar. Sie kann entsprechend dem Wochen-, Tages-, bzw. Stundenbedarf der Backprodukte und ihrer Backzeiten programmiert werden. Sie ist zudem mit verschiedenen Mitteln von außen beeinflussbar. Der operative Bedarf kann vom Bediener der Backvorrichtung, von der Zentralstelle des jeweiligen Supermarktes, jedoch auch durch eine intelligente Rückkopplung mittels vom Kassensystem gelieferter Verkaufsdaten gesteuert werden.

Die Steuerung bestimmt insbesondere für jeden Backprodukte enthaltenden Lebensmittelträger die Verweildauer in einzelnen Abschnitten der Backvorrichtung, insbesondere die Backzeit und ggf. die entsprechende Temperatur im Ofen.

Schließlich wird ein Backverfahren zur Herstellung frischer Backprodukte in einer Backvorrichtung, bei dem
- vorgebackene Backprodukte und/oder Tiefkühlteiglinge auf einem Lebensmittelträger und der Lebensmittelträger in einem Bevorratungsregal abgelegt werden;
- eine Beschickungseinrichtung mit einem Lader, der eine Greifeinrichtung umfasst, den belegten Lebensmittelträger aus dem Bevorratungsregal entnimmt und zum Backen in einen Backofen einführt;
- nach einer dem Backprodukt angepassten, einstellbaren Zeit die Beschickungseinrichtung den Lebensmittelträger aus dem Backofen entnimmt und zu einem parallel zum Bevorratungsregal angeordneten Ausgaberegal transportiert,
- die Beschickungseinrichtung die fertigen Backprodukte im Ausgaberegal ablegt und anschließend den leeren Lebensmittelträger auf eine Ablagestation ablegt, wobei
- die Beschickungseinrichtung horizontal parallel zum Bevorratungsregal und zum Ausgaberegal bewegt wird und die Greifeinrichtung des Laders horizontal senkrecht zur Bewegungsrichtung der Beschickungseinrichtung sowie in vertikaler Richtung bewegt wird, um einen Lebensmittelträger aus dem Bevorratungsregal zu entnehmen, in den Backofen einzuführen, aus dem Backofen zu entnehmen und die Backprodukte im Ausgaberegal abzulegen.

Für das beschriebene Backverfahren zur Herstellung frischer Backprodukte in einer automatischen Backvorrichtung werden zunächst vorgebackene Backprodukte und/oder Tiefkühlteiglinge auf einen transportierbaren und temperaturbeständigen Lebensmittelträger in einem entsprechenden Bevorratungsregal abgelegt. Tiefkühlteiglinge werden dabei in ein Tiefkühlregal eingelagert, in der Regel hat dies die Kapazität eines Tagesbedarfs. Zum Einlagern wird die jeweilige Kammer kurz geöffnet. Ein Teil dieses Regals kann in Folge auch zum Auftauen der Tiefkühlware genutzt werden.

Vorgebackene Produkte wiederum werden in einem entsprechend einfacheren Regalteil gelagert, da für diese keine zusätzliche Kühlung nötig ist.

Die Einlagerung im Bevorratungsregal kann dabei automatisch durch einen Belader oder aber manuell erfolgen.

Eine Beschickungseinrichtung holt anschließend die mit Backausgangsprodukten belegten Lebensmittelträger aus dem Bevorratungsregal ab und führt diese in einen vorgeheizten Backofen ein. Dabei kann ein hierfür genutzter Etagenbackofen von hinten beschickt werden. Für den Kunden kann durch den Einsatz von Scheiben auf der Rückseite des Ofens vom Laden aus die Sicht auf den gesamten Lade- und Backvorgang erhalten bleiben.

Die Temperatur im Ofen wird entsprechend der herzustellenden Backprodukte gesteuert. Sie beträgt üblicherweise zwischen 100°C und 300°C.

Nach einer dem Backprodukt angepassten, voreingestellten Zeit holt die Beschickungseinrichtung die mit den Backprodukten belegte Ablagefläche aus dem Ofen ab und legt die fertigen Backprodukte in das Ausgaberegal ab. Das Ausgaberegal enthält dabei typischerweise einen Selbstbedienungsbereich, an dem Kunden die Backprodukte entnehmen können. Außerdem kann es ein Pufferregal zur Zwischenlagerung und ggf. weiteren Abkühlung der Backprodukte enthalten.

Dabei wird der mit den Backprodukten belegte Lebensmittelträger durch eine zentrale Beschickungseinrichtung von einem Abschnitt der Backvorrichtung in einen anderen Abschnitt verbracht. Diese Beschickungseinrichtung wird hierzu auf einer Schiene entlang einer x-Achse horizontal bewegt. Ein in der Beschickungseinrichtung enthaltener Lader wird wiederum entlang einer y-Achse in vertikaler Richtung sowie entlang einer z-Achse, die senkrecht zu den beiden anderen Achsen ist, in horizontaler Richtung bewegt. Dabei transportiert er mit Hilfe einer Greifeinrichtung, die den Rand des Lebensmittelträgers gleichzeitig oberhalb und unterhalb der Auflagefläche greift, und damit den vorgebackene Backprodukte und/oder Tiefkühlteiglinge bzw. die Backendprodukte enthaltenden Lebensmittelträger aufnimmt, zwischen den verschiedenen Abschnitten der Backvorrichtung.

In einer besonderen Ausführung des Backverfahrens führen mehrere in der Beschickungseinrichtung enthaltene Lader gleichzeitig unabhängige Be- und Entladevorgänge aus. Die Grenzen der unabhängigen Ansteuerbarkeit verschiedener Abschnitte der Backvorrichtung sind dabei selbstverständlich physischer Art: Es können nur nebeneinanderliegende oder hintereinanderliegende Abschnitte gleichzeitig durch die verschiedenen Lader der Beschickungseinrichtung angesteuert werden, nicht aber zwei Abschnitte von denen sich der eine am einen Ende der Backvorrichtung und der andere am anderen Ende der Backvorrichtung befindet.

Im beschriebenen Backverfahren können dabei in einem zusätzlichen, den anderen Schritten vorgelagerten Schritt die vorgebackenen Backprodukte und/oder Tiefkühlteiglinge von Hand oder automatisch auf einen transportierbaren und temperaturbeständigen Lebensmittelträger aufgelegt werden und von einem Belader anschließend in einem Bevorratungsregal abgelegt werden. Wird dieser Schritt automatisch mittels eines Belegeroboters erledigt, so werden die entsprechenden Backausgangsprodukte dabei erkannt und lagerichtig aufgelegt.

In einer Ausgestaltung des Backverfahrens können zudem in einem zusätzlichen, den anderen Schritten nachgelagerten Schritt die leeren Lebensmittelträger in einer Reinigungsstation gereinigt und einer Neubelegung zugeführt werden.

Um den Abkühlvorgang der fertigen Backprodukte zu beschleunigen, werden diese in einer besonderen Ausführung des Verfahrens durch ein an der Beschickungseinrichtung angeordnetes Kühlaggregat während ihres Transports in eines der Ausgaberegale abgekühlt. Dies kann beispielsweise mittels eines Luftstroms erfolgen.

Zur schnellen Rückgewinnung der Lebensmittelträger und für ihren erneuten Einsatz zur Herstellung neuer Backprodukte können in einer bevorzugten Variante des beschriebenen Backverfahrens die fertigen Backprodukte von der Beschickungsvorrichtung durch zusätzliches Verkippen des Lebensmittelträgers in das Ausgaberegal hinein abgestreift werden.

Um das erfindungsgemäße Backverfahren hochautomatisiert durchführen zu können, besteht die Möglichkeit, für jedes Backprodukt die einzelnen Teilschritte durch Programmierung vorzugeben und/oder durch eine Steuerung unter Berücksichtigung von parallel ermittelten Bedarfsparametern aktiv zu beeinflussen. Dies kann durch aktive Eingabe durch den Bediener der Backvorrichtung oder aber durch eine intelligente Rückkopplung mittels vom Kassensystem gelieferter Verkaufsdaten erfolgen.

Die erfindungsgemäße Lösung soll nun anhand verschiedener Aspekte eines Anwendungsbeispiels und entsprechender Figuren erläutert werden. Hierbei handelt es sich um eine Backvorrichtung, die sogenannte "Backzelle", die in einen Supermarkt integriert werden kann.

Dabei zeigt:

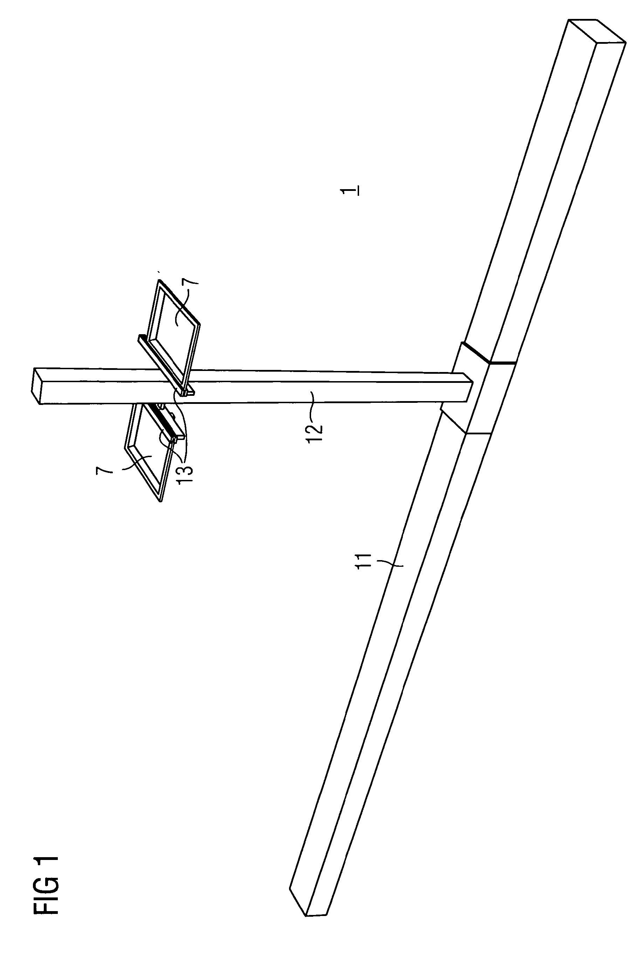

Fig. 1 zeigt eine perspektivische Ansicht einer erfindungsgemäßen Beschickungseinrichtung mit zwei zu beiden Seiten der Säule angeordneten Ladern;

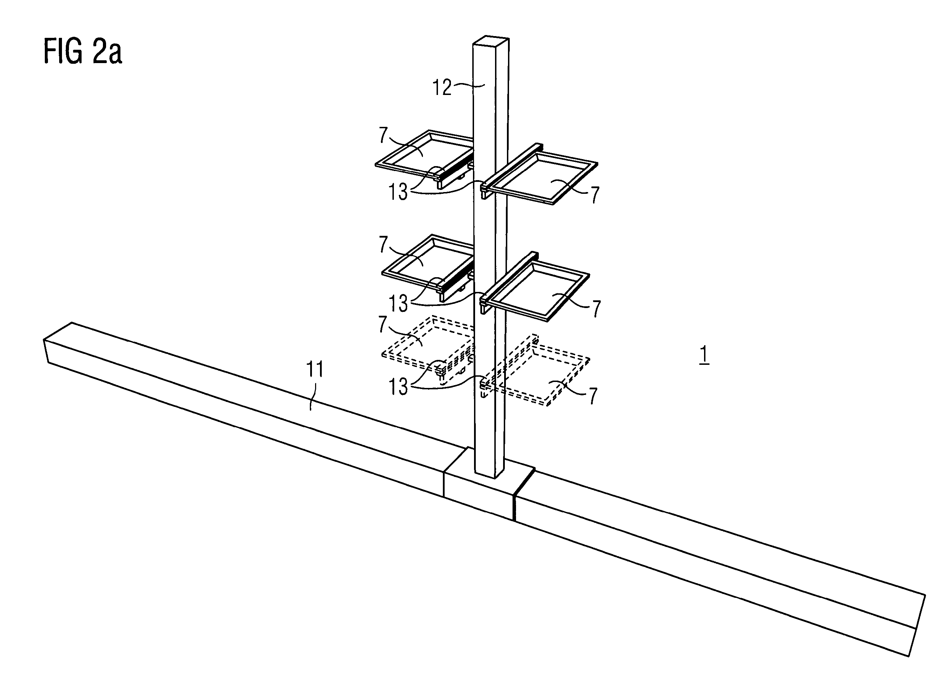

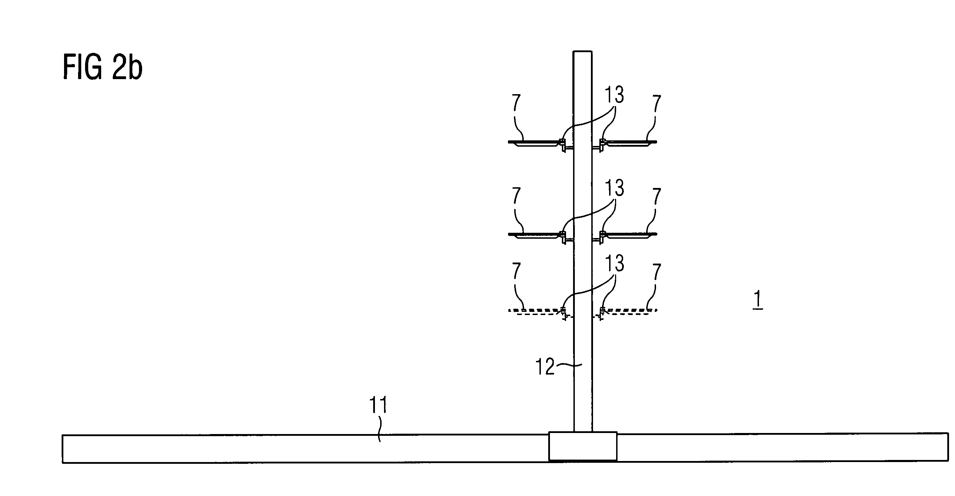

Fig. 2a und 2b zeigen eine perspektivische Ansicht sowie die Vorderansicht einer erfindungsgemäßen Beschickungseinrichtung mit einer Vielzahl von übereinander sowie zu beiden Seiten der Säule angeordneten Ladern

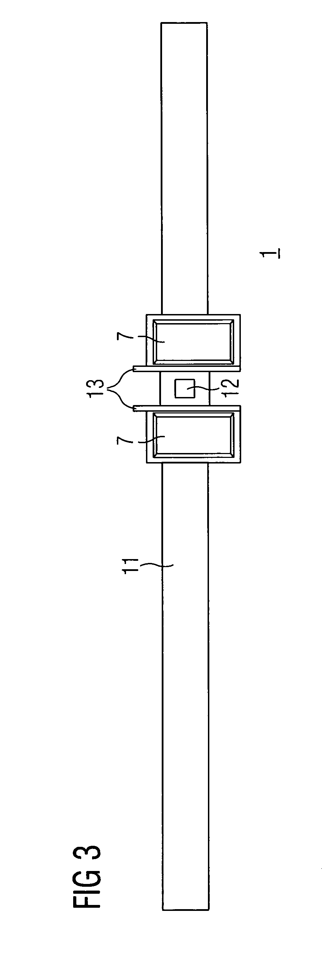

Fig. 3 zeigt die Draufsicht einer erfindungsgemäßen Beschickungseinrichtung

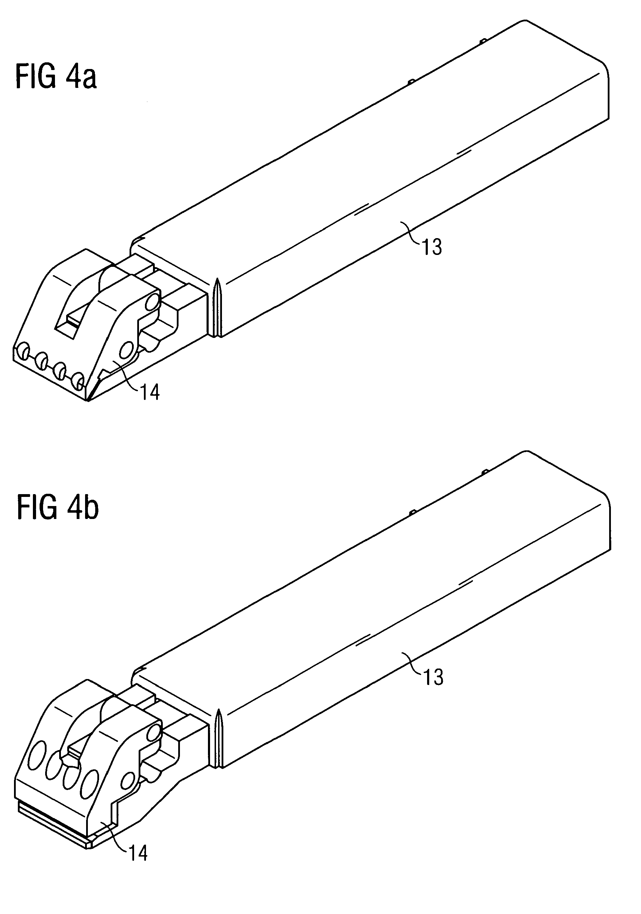

Fig. 4a und 4b zeigen zwei Varianten eines Laders der erfindungsgemäßen Beschickungseinrichtung mit ihren Greifeinrichtungen

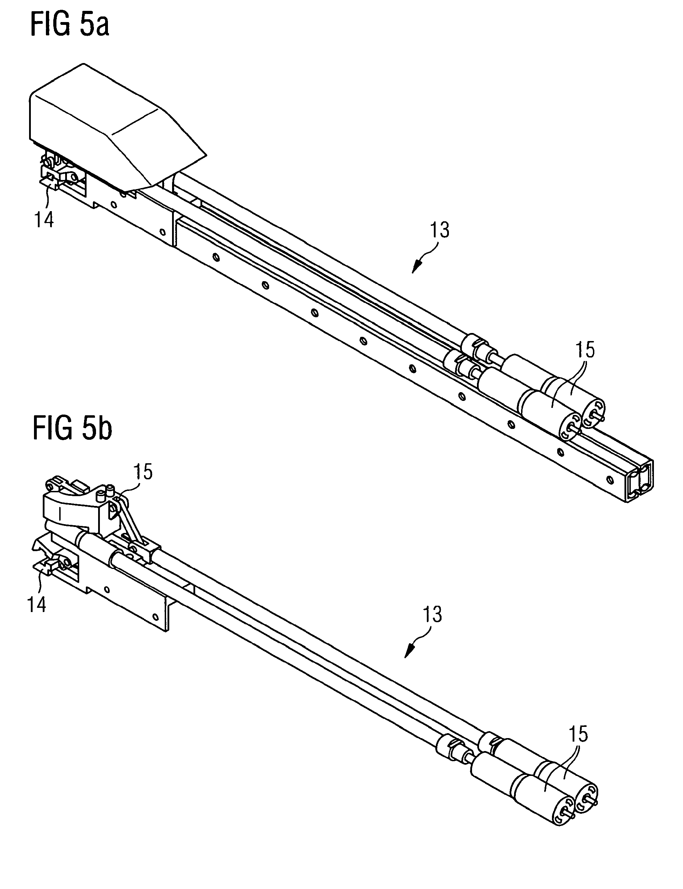

Fig. 5a und 5b zeigen Details einer Variante eines Laders der erfindungsgemäßen Beschickungseinrichtung mit seinen Antriebseinrichtungen und seiner Greifeinrichtung

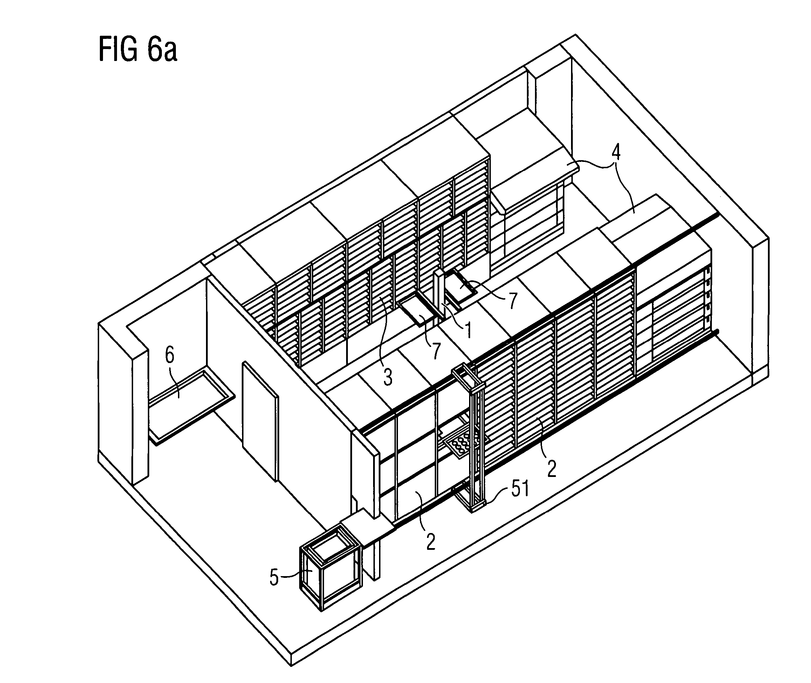

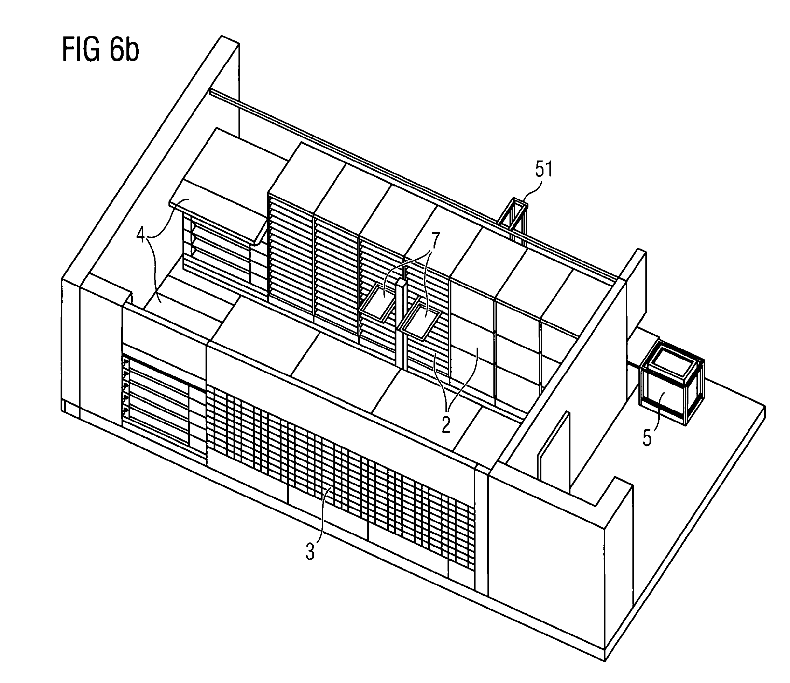

Fig. 6a und 6b zeigen perspektivische Ansichten einer erfindungsgemäßen Backvorrichtung

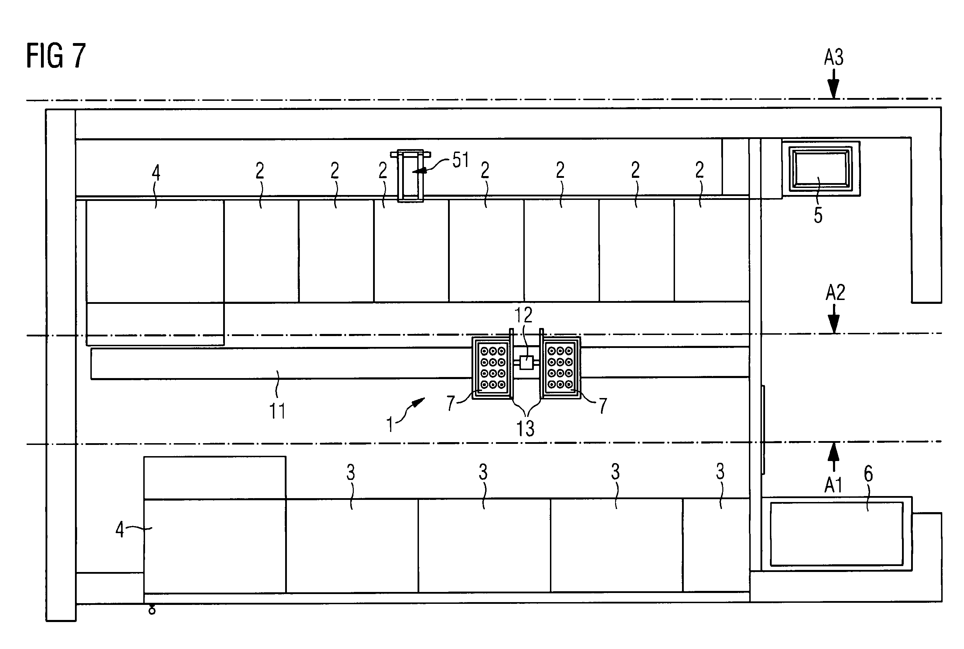

Fig. 7 zeigt die Draufsicht einer erfindungsgemäßen Backvorrichtung

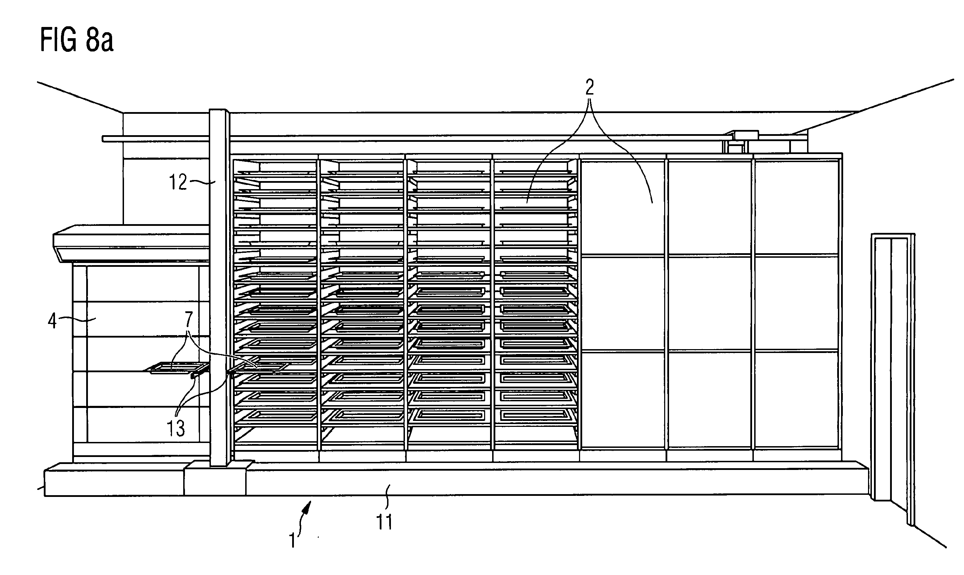

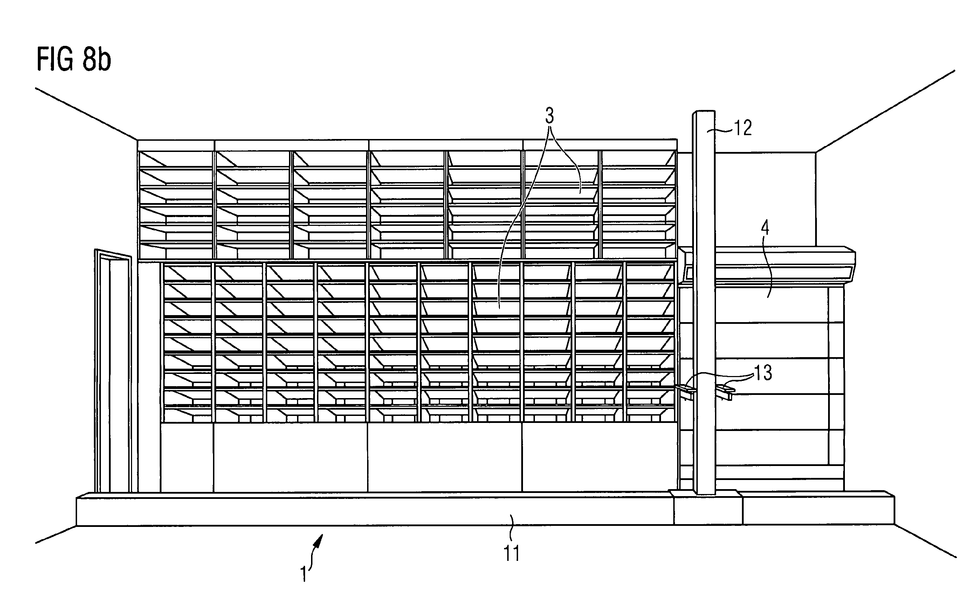

Fig. 8a und 8b zeigen die Ansichten einer erfindungsgemäßen Backvorrichtung entlang einer Schnittebene A1 und A2 entsprechend Pfeilrichtung in Fig. 7

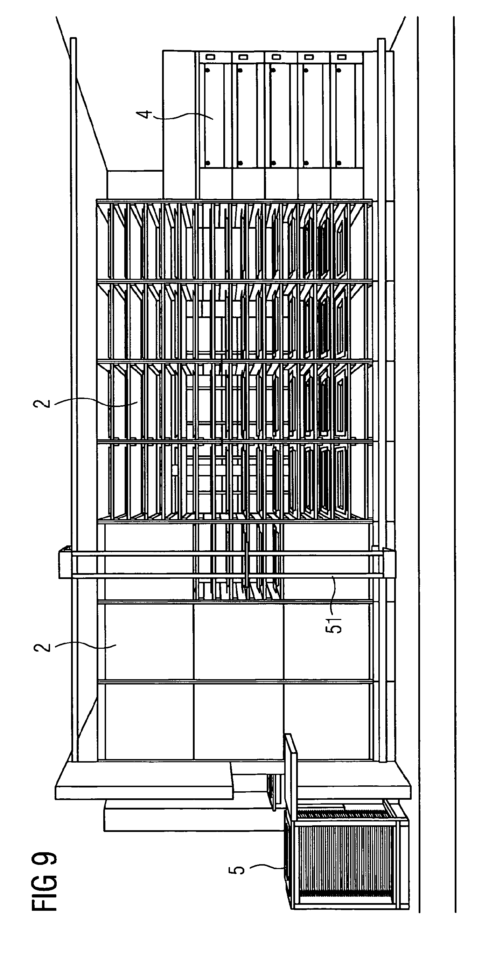

Fig. 9 zeigt die Rückansicht einer erfindungsgemäßen Backvorrichtung entlang einer Schnittebene A3 entsprechend Pfeilrichtung in Fig. 7

### Auflegestation, Belader, Smart-Regal

In das Smart-Regal, das die Funktion eines Bevorratungsregals 2 erfüllt, können die Backteiglinge in mehreren Etagen auf Bleche eingelegt werden. Beispielsweise kann die Höhe 3.000 mm betragen bei einer Bodenfreiheit von 650 mm und Blechabständen von 60 und 120 mm. Die Länge kann je nach Einsatzort und entsprechender Kundenverteilung sowie angebotenen Backprodukten variieren, üblicherweise wird eine Länge von ca. 3.000 - 3.500 mm lang gewählt.

Die Befüllung kann von vorn, also von außerhalb der Backvorrichtung erfolgen. Hierzu können in einer Auflegestation in einem Vorbereitungsraum die verschiedenen Backprodukte wie Brötchen, Brot und ähnliche Produkte, üblicherweise ein Sortiment von ca. 30 Backprodukten, als vorgebackene Produkte oder aber als frisch, tiefgefrorene oder aufgetaute Teiglinge auf die Bleche aufgelegt werden.

Das Auflegen der Teiglinge erfolgt von Hand oder automatisch mit einem Kleinroboter oder Handlingsgerät. Die Backprodukte werden im Fall eines automatischen Auflegens erkannt und lagerichtig aufgelegt.

Diese Bleche werden anschließen mit einem einfachen Belader 51, der in x―, y― und z-Richtung linear beweglich ist, in das Smart-Regal eingebracht.

In das Smart-Regal wird in der Regel eine Tagesmenge an vorgebackener Ware und/oder Tiefkühlteiglingen eingelagert, wofür das Smart-Regal, sofern beide Varianten benötigt werden, in zwei Bereiche eingeteilt ist: Im ersten Bereich, dem in der Regel offenen Regal, wird die vorgebackene Ware unter Raumtemperatur eingelagert. Im zweiten Bereich wird die Tiefkühlware unter entsprechenden Tiefkühlbedingungen eingelagert, wobei dieser Bereich des Regals mit sich automatisch zur Beschickung bzw. Entnahme öffnenden Türen ausgestattet ist.

Im Tiefkühlregal können sich mehrere, ggf. separat steuerbare Kühlkammern befinden, um eine hohe Energieeffizienz zu erreichen. Pro Regalebene können in der Tiefenrichtung eines oder mehrere Bleche hintereinander oder nebeneinander gelagert werden. Ein Teil des Smart-Regals kann dabei auch zum Auftauen der Tiefkühlware genutzt werden.

Die Entnahme aus dem Smart-Regal wiederum wird von der anderen Seite, also innerhalb der Backvorrichtung vorgenommen. Die Abnahme aus dem Smart-Regal durch die Beschickungseinrichtung 1 kann aus allen Regalhöhen erfolgen.

### Beschickungseinrichtung 1

Die Beschickungseinrichtung 1 für den Ofen hat eine horizontale x-Achse, die in als Schiene 11 ausgeführt ist, auf der sich der Beschicker linear in x-Richtung bewegen kann und die sich in der Regel am Boden der Backvorrichtung befindet. Diese Schiene 11 ist im beschriebenen Beispiel ca. 4.500 mm lang. Auf dieser x-Achse steht eine vertikale y-Achse, die als Säule 12 ausgebildet ist, an der ein Lader 13, der ein Greifsystem aufweist und der in Richtung der z-Achse bewegbar ist, beweglich befestigt ist. Der Lader 13 kann sich dabei in entlang der y-Achse im beschriebenen Beispiel über einen Bereich von ca. 1.500 mm auf- und abbewegen, in Richtung der z-Achse hingegen kann er eine lineare Bewegung über einen Bereich von ca. 2.600 mm ausführen, wobei dies jeweils hälftig zu beiden Seiten der entlang der x-Achse verlaufenden Schiene 11 erfolgen kann.

Je nach benötigtem Durchsatz befinden sich zusätzliche weitere Lader 13 an der Säule 12, vorzugsweise in x-Richtung jeweils beidseitig der Säule 12, wobei im Anwendungsbeispiel bis zu sechs Lader 13 an der Säule 12 der Beschickungseinrichtung 1 beweglich befestigt werden können.

Der Lader 13 entnimmt die Bleche aus dem Smart-Regal, schiebt sie in den Ofen und holt die Bleche nach dem Backen wieder aus dem Ofen ab. Dabei werden die Bleche werden mit Hilfe eines Greifers in den jeweiligen Positionen gegriffen und fixiert.

Vorteilhafterweise kann sich der Lader 13 dabei um die y-Achse der Beschickungseinrichtung 1 um mindestens 90°, drehen, um die Bleche ggf. von quer auf längs bzw. wieder zurück zu drehen. Dadurch sind die Bleche sowohl längs als auch quer in die Öfen bzw. Regale einschiebbar.

Alternativ kann dies auch durch mehrere Lader 13 gleichzeitig erfolgen, wobei dann die Ablage der Bleche in mehrere Öfen bzw. mehrere Herde eines Ofens erfolgen kann. Jeder Lader 13 kann sich dabei vorteilhaft unabhängig von jedem anderen an der y-Achse bewegen.

Desweiteren kann der Beschicker die Bleche mittels Luftstrom während der Fahrt zum Selbstbedienungsregal abkühlen, wenn dies notwendig ist, da eine sofortige Entnahme durch den Kunden gewünscht wird. Dies ist ggf. durch eine entsprechende Steuerung einschaltbar, die auf die Nachfrage der einzelnen Produkte durch die Kunden reagiert und bei geringem oder fehlendem Vorrat des entsprechenden Produkts im Selbstbedienungsregal die Abkühlfunktion des Beschickers einschaltet. Das den Luftstrom erzeugende Kühlaggregat ist idealerweise an der in Richtung der y-Achse ausgerichteten Säule 12 installiert.

Die Backprodukte können anschließend vom durch die Beschickungseinrichtung 1 transportierten Blech in das Selbstbedienungsregal eingebracht werden. Dies kann durch ein entsprechendes Abkippen erfolgen, da der Lader 13 die Bleche um +/-90° um die z-Achse verkippen und die fertigen Backprodukte folglich zum Abrutschen in das entsprechende Fach des Selbstbedienungsregals bringen kann.

Zusätzlich kann der Lader 13 jedoch noch eine weitere horizontale Drehachse aufweisen, um eine Schräge zum Abstreifen der Backprodukte zu erzeugen. Damit ist nicht zunächst eine Drehung um die y-Achse und hernach um die z-Achse zum Abstreifen nötig. Zudem macht dies das Kippen sowohl über die Breite als auch über die Tiefe des Blechs möglich.

Werden die Backprodukte hingegen nicht sofort benötigt, so können sie auf ihren Blechen in ein Pufferregal geschoben werden, das gleichzeitig als Abkühlregal dient. In diesem Regal kühlen die Backprodukte entweder passiv, d.h. ohne zusätzliche Kühlung durch ein Abkühlsystem oder aber mit Hilfe einer aktiven Kühlung ab, wobei die Art der Kühlung wiederum vom Bedarf abhängig ist. Nach dem Abkühlen können die Bleche mit den noch darauf befindlichen Backprodukten durch die Beschickungseinrichtung 1 wieder aufgenommen werden und die Backprodukte schlussendlich vom Blech in das Selbstbedienungsregal eingebracht werden. Das leere Blech kann anschließend von der Beschickungseinrichtung 1 in die Reinigungseinrichtung im vorderen Bereich der Backvorrichtung transportiert werden.

Die hier beschriebene Beschickungseinrichtung 1 benötigt dabei für die Funktionen
- Blech aus dem Smart-Regal holen
- Blech in den Ofen schieben
- anderes Blech aus dem Ofen holen
- Blech am Selbstbedienungsregal leeren
- Blech in die Reinigung geben
ca. zwei Minuten, wobei diese Funktionen nicht notwendigerweise in der hier beschriebenen Reihenfolge, sondern auch in beliebiger Reihenfolge je nach Bedarf der einzelnen Backprodukte erfolgen können.

### Ofen

Im beschriebenen Beispiel enthält die Backvorrichtung zwei Öfen. Jeder der Öfen enthält 5 Etagen, wobei diese einzelnen Etagen des Ofens als Herde bezeichnet werden. Je Herd kann ein Blech, dessen Maße standardmäßig in der Tiefe 400 mm und in der Breite 600 mm betragen, oder aber mehrere Bleche nebeneinander eingeführt werden. Im Ausführungsbespiel werden somit in der Regel zwei Bleche nebeneinander eingeführt. Da jedoch weder die Belegstation noch die verschiedenen Regale noch die Beschickungseinrichtung 1 oder aber die Reinigungsstation 6 eine bestimmte Größe der verwendeten Bleche zwingend vorschreiben, ist es im Bedarfsfall auch möglich, mit kleineren Blechen zu arbeiten und mehr als zwei Bleche im Herd nebeneinander einzuführen, wobei die maximale Größe natürlich durch die Tiefe und Breite der verwendeten Öfen und Regale, der Belegstation und der Reinigungsstation 6 bestimmt wird.

Die Öfen werden im beschriebenen Beispiel von hinten beschickt, wobei zumindest einer der Öfen der Backvorrichtung so angeordnet und gestaltet ist, dass der Kunde durch entsprechende Scheiben dem Backen zusehen kann.

Die Backzeit beträgt je nach Backprodukt zwischen 10 und 22 Minuten.

### Selbstbedienungsregal

Das Selbstbedienungsregal dient dem Anbieten der Backprodukte an den Kunden. Die Anzahl der in der Backvorrichtung eingesetzten Selbstbedienungsregale wird variieren: Sie ist abhängig von der Art des Abverkaufs der Backprodukte vor Ort. Ist die Anzahl der Kunden zu Stoßzeiten gegenüber der Anzahl der Kunden zu Normalzeiten stark erhöht, so wird die Zahl der Selbstbedienungsregale erhöht. Gleiches gilt für eine große Anzahl verschiedener angebotener Backprodukte. So können beispielsweise drei bis vier Selbstbedienungsregale nebeneinander und vier Regale übereinander angeordnet sein. Die Beschickung der Selbstbedienungsregale erfolgt dabei von innen durch die Beschickungseinrichtung 1 der Backvorrichtung. Die Entnahme erfolgt hingegen von außen durch den Kunden.

Zudem können Pufferregale, die sich in der Regel oberhalb der Selbstbedienungsregale befinden als zusätzliche Bevorratungsregale 2 für die fertigen Backprodukte sowie zum schonenden Abkühlen der Backprodukte nach dem Backprozess eingesetzt werden.

### Reinigungsstation 6

Die leeren Bleche werden anschließend von der Beschickungseinrichtung 1 zur Reinigungsstation 6 gebracht und darin abgelegt. Von dieser Station werden die Bleche entweder vom Personal oder aber von einem Roboter wieder aufgenommen und zur Auflegestation gebracht, wo sie erneut belegt werden.

### Programmierung

Die Backvorrichtung ist programmierbar. Sie kann vor Ort entsprechend dem Wochen-, Tages-, bzw. Stundenbedarf programmiert werden. Dabei werden alle Daten der Backprodukte und ihrer jeweiligen Backzeiten hinterlegt. Diese Daten können jedoch entsprechend der aktuellen Situation verändert werden. Derartige Änderungen sind auf verschiedenen Wegen möglich. Zum einen kann eine Einsteuerung des operativen Bedarfs durch den Bediener der Backvorrichtung erfolgen. Zum anderen ist eine Steuerung über den aktuellen Abverkauf dadurch möglich, dass diese Steuerung an das Kassensystem angeschlossen ist. Eine weitere Möglichkeit des Eingriffs besteht von der Zentralstelle des Supermarktes. Von hier aus wird z.B. Aktions- oder Tagesware eingestellt. Nicht zuletzt verfügt das System über eine Selbstlernfunktion, über die durch Auswertung der regelmäßig durch das Kassensystem gewonnenen Istverkaufsdaten die einmal programmierten Wochen-, Tages-, bzw. Stundenbedarfsdaten fortlaufend angepasst werden können.

Zudem erfolgt bei allen Bedien- und Programmiervorgängen eine visuelle Führung.

### Bezugszeichenliste

- 1: Beschickungseinrichtung
- 11: Schiene
- 12: Säule
- 13: Lader
- 14: Greifeinrichtung
- 15: Antriebseinrichtung
- 16: Kühleinrichtung
- 2: Bevorratungsregal
- 3: Ausgaberegal
- 4: Backofen
- 5: Beladestation
- 51: Belader
- 6: Reinigungsstation
- 7: Lebensmittelträger

## Patentansprüche

1. Backofenbeschickungseinrichtung (1), umfassend mindestens eine in horizontaler x-Richtung verlaufende Schiene (11), an der mindestens eine in vertikaler y-Richtung ausgerichtete Säule (12) bewegbar gelagert ist, und mindestens einen an der Säule (12) in y-Richtung bewegbar gelagerten Lader (13), der eine Greifeinrichtung (14) für einen Lebensmittelträger (7) umfasst, die in z-Richtung, senkrecht zur x- und y-Richtung, linear bewegbar gelagert ist.

2. Beschickungseinrichtung (1) nach Anspruch 1, **dadurch gekennzeichnet, dass** die Greifeinrichtung (14) um eine vertikale Achse drehbar gelagert ist.

3. Beschickungseinrichtung (1) nach Anspruch 1 oder 2, **dadurch gekennzeichnet, dass** die Greifeinrichtung (14) um eine horizontale Achse drehbar gelagert ist.

4. Beschickungseinrichtung (1) nach einem der Ansprüche 1 bis 3, **dadurch gekennzeichnet, dass** mindestens zwei Lader (13) vorgesehen sind, die relativ zueinander an je einer Seite der Säule (12) angeordnet sind oder/und relativ zueinander übereinander an derselben Seite der Säule (12) angeordnet sind.

5. Beschickungseinrichtung (1) nach einem der Ansprüche 1 bis 4, **dadurch gekennzeichnet, dass** die Lader (13) und deren Greifeinrichtungen (14) jeweils unabhängig voneinander bewegbar und steuerbar sind.

6. Beschickungseinrichtung (1) nach einem der Ansprüche 1 bis 5, **dadurch gekennzeichnet, dass** sie mindestens eine Kühleinrichtung (16) zur Kühlung mindestens eines Lebensmittelträgers (7) aufweist.

7. Beschickungseinrichtung (1) nach einem der Ansprüche 1 bis 6, **dadurch gekennzeichnet, dass** die Greifeinrichtung (14) an einer Teleskopführung horizontal beweglich angeordnet ist.

8. Backvorrichtung, mindestens umfassend einen Backofen (4), ein Bevorratungsregal (2), ein parallel mit einem Abstand zum Bevorratungsregal (2) angeordnetes Ausgaberegal (3) und in dem Abstand zwischen Bevorratungsregal (2) und Ausgaberegal (3) eine parallel zu Bevorratungsregal (2) und Ausgaberegal (3) horizontal beweglich angeordnete Beschickungseinrichtung (1), wobei die Beschickungseinrichtung (1) mindestens einen Lader (13) mit einer Greifeinrichtung (14) zum Greifen und Halten eines Lebensmittelträgers (7) aufweist und die Greifeinrichtung (14) in vertikaler und horizontaler Richtung so bewegbar ist, dass Backprodukte enthaltende Lebensmittelträger (7) zwischen Bevorratungsregal (2), Backofen (4) und Ausgaberegal (3) bedarfsweise hin und her bewegbar sind.

9. Backvorrichtung nach Anspruch 8, **dadurch gekennzeichnet, dass** die Beschickungseinrichtung (1) nach einem der Ansprüche 1 bis 8 ausgestaltet ist.

10. Backvorrichtung nach Anspruch 8 oder 9, **dadurch gekennzeichnet, dass** das Bevorratungsregal (2) ein Kühlregal umfasst.

11. Backvorrichtung nach einem der Ansprüche 8 bis 10, **dadurch gekennzeichnet, dass** das Ausgaberegal (3) Fächer umfasst, aus denen die darin abgelegten Backwaren von der der Beschickungseinrichtung (1) gegenüberliegenden Seite des Ausgaberegals (3) entnehmbar sind.

12. Backvorrichtung nach einem der Ansprüche 8 bis 11, **dadurch gekennzeichnet, dass** die Beschickungseinrichtung (1) durch eine Steuerungseinrichtung programmierbar und steuerbar ist.

13. Backverfahren zur Herstellung frischer Backprodukte in einer Backvorrichtung, bei dem
- vorgebackene Backprodukte und/oder Tiefkühlteiglinge auf einem Lebensmittelträger (7) und der Lebensmittelträger (7) in einem Bevorratungsregal (2) abgelegt werden;
- eine Beschickungseinrichtung (1) mit einem Lader (13), der eine Greifeinrichtung (14) umfasst, den belegten Lebensmittelträger (7) aus dem Bevorratungsregal (2) entnimmt und zum Backen in einen Backofen (4) einführt;
- nach einer dem Backprodukt angepassten, einstellbaren Zeit die Beschickungseinrichtung (1) den Lebensmittelträger (7) aus dem Backofen (4) entnimmt und zu einem parallel zum Bevorratungsregal (2) angeordneten Ausgaberegal (3) transportiert,
- die Beschickungseinrichtung (1) die fertigen Backprodukte im Ausgaberegal (3) ablegt und anschließend den leeren Lebensmittelträger (7) auf eine Ablagestation ablegt, wobei
- die Beschickungseinrichtung (1) horizontal parallel zum Bevorratungsregal (2) und zum Ausgaberegal (3) bewegt wird und die Greifeinrichtung (14) des Laders (13) horizontal senkrecht zur Bewegungsrichtung der Beschickungseinrichtung (1) sowie in vertikaler Richtung bewegt wird, um einen Lebensmittelträger (7) aus dem Bevorratungsregal (2) zu entnehmen, in den Backofen (4) einzuführen, aus dem Backofen (4) zu entnehmen und die Backprodukte im Ausgaberegal (3) abzulegen.

14. Backverfahren nach Anspruch 13, **dadurch gekennzeichnet, dass** mehrere Lader (13) der Beschickungseinrichtung (1) gleichzeitig verschiedene Be- und Entladevorgänge ausführen.

15. Backverfahren nach Anspruch 13 oder 14, **dadurch gekennzeichnet, dass** die fertigen Backprodukte zwischen der Entnahme aus dem Backofen (4) und der Ablage im Ausgaberegal (3) gekühlt werden.

16. Backverfahren nach einem der Ansprüche 13 bis 15, **dadurch gekennzeichnet, dass** für jedes Backprodukt die einzelnen Teilschritte durch Programmierung vorgegeben werden und/oder durch eine Steuerung unter Berücksichtigung von parallel ermittelten Bedarfsparametern aktiv beeinflusst werden.
